# EUROPEAN PATENT SPECIFICATION

(11) **EP 2 911 441 B1**
(45) Date of publication and mention of the grant of the patent: **28.09.2022**
(21) Application number: 15153927.7
(22) Date of filing: 05.02.2015
(51) Int. Cl.: H04W 24/06, H04L 43/08, H04L 43/50

(54) **Testing apparatus for communication system and method therefor**
Prüfvorrichtung für ein Kommunikationssystem und Verfahren dafür
Appareil de test pour système de communication et procédé associé

(30) Priority: 19.02.2014 US 201414183761
(43) Date of publication of application: 26.08.2015
(73) Proprietor: Keysight Technologies Singapore (Sales) Pte.Ltd., Singapore 768923 (SG)
(72) Inventor: Hämeenniemi, Jukka, 90230 Oulu (FI); Laukkanen, Juha, 90230 Oulu (FI); Ojala, Kai, 90230 Oulu (FI); Paananen, Kimmo, 90230 Oulu (FI); Pörsti, Yrjö, 90230 Oulu (FI); Taavettila, Heikki, 90230 Oulu (FI)
(74) Representative: Zimmermann, Tankred Klaus

(56) References cited:
- US-A- 5 930 707
- US-A1- 2006 280 313
- US-A1- 2008 049 623
- US-A1- 2010 323 689
- US-A1- 2013 331 082
- US-B1- 6 490 266
- US-B1- 7 010 295
- US-B1- 8 265 619

## Description

### Field of the invention

The exemplary and non-limiting embodiments of the invention relate generally to communication systems. Embodiments of the invention relate especially to a user terminal and a method for testing wireless communication systems.

### Background

The following description of background art may include insights, discoveries, understandings or disclosures, or associations together with disclosures not known to the relevant art prior to the present invention but provided by the invention. Some of such contributions of the invention may be specifically pointed out below, whereas other such contributions of the invention will be apparent from their context.

Communication systems are used to transfer speech and data between the communicating endpoints. In these systems, and in wireless communication system in particular, there many aspects that have an effect on the quality of transmission. The quality may depend on the properties of the transceivers. In addition, the transmission path may cause deterioration of the transmitted signals.

In many situations there is a need to determine information related to the quality of transmission. The quality information may be taken into account when studying the operation of a communication system or it may be used in the development of communication equipment, for example. US 2010/323689, US 7010295, US 8265619, US2006/028313, US 2013/0331082 and 5930707 disclose testing solutions for network elements in mobile networks.

### Summary

The following presents a simplified summary of the invention in order to provide a basic understanding of some aspects of the invention. This summary is not an extensive overview of the invention. It is not intended to identify key/critical elements of the invention or to delineate the scope of the invention. Its sole purpose is to present some concepts of the invention in a simplified form as a prelude to a more detailed description that is presented later.

According to an aspect of the present invention, there is provided a user terminal for testing connections, comprising: means for establishing a digital connection with an external controller external to the user terminal; means for receiving from the external controller on the digital connection test parameters and a command to establish a wireless connection to a given subscriber address, the test parameters comprising reference audio data; means for establishing a wireless phone call connection to the given subscriber address; means for receiving sample audio data on the wireless connection; means for comparing the received sample audio data to the reference audio data and determining based on the comparison one or more quality indicators describing the voice quality of the established connection; means for transmitting one or more quality indicators describing the voice quality of the established connection information related to the received sample audio data to the external controller using the digital connection.

According to an aspect of the present invention, there is provided a method performed by a user terminal, comprising: establishing a digital connection with a controller; receiving from the controller on the digital connection test parameters and a command to establish a wireless connection to a given subscriber address, the test parameters comprising reference audio data; establishing a wireless phone call connection to the given subscriber address; receiving sample audio data on the wireless connection; comparing the received sample audio data to reference audio data and determining based on the comparison one or more quality indicators describing the voice quality of the established connection; transmitting one or more quality indicators describing the voice quality of the established connection to the controller using the digital connection.

As an example, there is provided an apparatus, comprising: at least one processor; and at least one memory including computer program code, the at least one memory and the computer program code configured to, with the at least one processor, cause the apparatus at least to: receive from an external controller test parameters and a command to establish a wireless data connection with an external server; establish a data connection with the external server; initiate data transfer with the external server; transmit to the external controller information on the data transfer during the data transfer; terminate the data connection when the data transfer is completed; transmit information related to the success of the data transfer to the external controller.

As an example, there is provided an apparatus, comprising: at least one processor; and at least one memory including computer program code, the at least one memory and the computer program code configured to, with the at least one processor, cause the apparatus at least to: establish a digital connection with an external mobile apparatus; transmit to the external mobile apparatus test parameters and a command to establish a wireless connection to the given subscriber address; receive from the external mobile apparatus on the digital connection information related to sample audio data, the audio data received by the external mobile apparatus over the established wireless connection.

### List of drawings

Embodiments of the present invention are described below, by way of example only, with reference to the accompanying drawings, in which
Figure 1 illustrates an example of a communication environment;
Figure 2 illustrates an example of a testing arrangement;
Figures 3 and 4 illustrate examples of apparatuses applying embodiments of the invention;
Figures 5A, 5B, 5C, 5D and 5E are flowcharts illustrating some embodiments voice quality testing;
Figures 6A and 6B are flowcharts illustrating some embodiments related to data transfer test; and
Figures 7 and 8 are signalling charts illustrating embodiments of the invention.

### Description some embodiments

The following embodiments are only examples. Although the specification may refer to "an", "one", or "some" embodiment(s) in several locations, this does not necessarily mean that each such reference is to the same embodiment(s), or that the feature only applies to a single embodiment. Single features of different embodiments may also be combined to provide other embodiments. Furthermore, words "comprising" and "including" should be understood as not limiting the described embodiments to consist of only those features that have been mentioned and such embodiments may also contain also features, structures, units, modules etc. that have not been specifically mentioned.

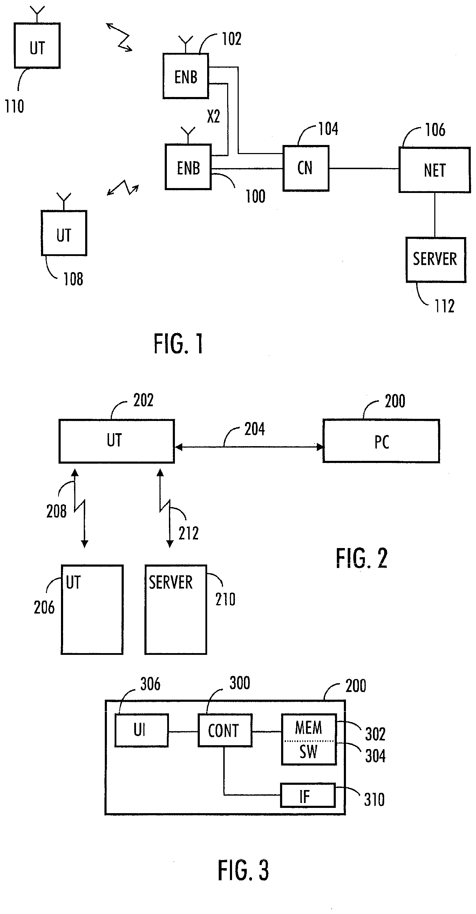

Figure 1 illustrates a simplified view of an example of a communication environment only showing some elements and functional entities, all being logical units whose implementation may differ from what is shown. The connections shown in Figure 1 are logical connections; the actual physical connections may be different. It is apparent to a person skilled in the art that the systems also comprise other functions and structures. It should be appreciated that the functions, structures, elements and the protocols used in or for communication are irrelevant to the actual invention. Therefore, they need not to be discussed in more detail here.

In the example of Figure 1, a radio system based on long term evolution advanced (LTE Advanced, LTE-A) network elements is shown. However, the embodiments described in these examples are not limited to the LTE-A radio systems but can also be implemented in other radio systems.

Figure 1 shows eNodeBs 100 and 102 connected to core network CN 104 of a communication system. The eNodeBs may be connected to each other over an X2 interface.

The eNodeBs 100, 102 that may also be called base stations of the radio system may host the functions for Radio Resource Management: Radio Bearer Control, Radio Admission Control, Connection Mobility Control, Dynamic Resource Allocation (scheduling). Depending on the system, the counterpart on the CN side can be a serving gateway (S-GW, routing and forwarding user data packets), packet data network gateway (P-GW, for providing connectivity of user devices (UEs) to external packet data networks), and/or mobile management entity (MME), etc. The MME (not shown) is responsible for the overall user terminal control in mobility, session/call and state management with assistance of the eNodeBs through which the user terminals may connect to the network.

Figure 1 shows two user terminals 108, 110. In this example terminal 108 is connected to eNodeB 100 and terminal 110 to eNodeB 102. The user terminal typically refers to a portable computing device that includes wireless mobile communication devices operating with or without a subscriber identification module (SIM), including, but not limited to, the following types of devices: a mobile station (mobile phone), smartphone, personal digital assistant (PDA), device using a wireless modem (alarm or measurement device, etc.), laptop and/or touch screen computer, tablet, phablet, game console, notebook, and multimedia device. A user terminal may also be a machine-type communications device, such as a sensor, actuator, processor or microcontroller capable to communicate via a radio interface. Additionally, a user terminal may also be a nearly exclusive uplink only device, of which an example is a camera or video camera loading images or video clips to a network.

The terminals of a communication system may communicate with each other, with terminals of other communication systems, with telephones of a fixed network or with servers 110 connected to Internet, for example. The connections may be voice calls or data connections, for example. In many modern communication systems all connections are realized with digital connections, i.e. packet data connections. The data transmitted between the communicating endpoints may be exposed to many kinds of processing on the data path between the endpoints. For example, there may be multiple speech codecs, analog-to-digital or digital-to analog conversions, for example. In addition, in mobile communication networks the air interface may introduce quality degradation or errors in transmission.

Testing the quality of transmissions is an important part in the design of new communication systems and communication equipment. For example, the International Telecommunication Union ITU has introduced various recommendations for testing voice quality in different systems. Examples of these recommendations are PESQ (Perceptual Evaluation of Speech Quality) and POLQA (Perceptual Objective Listening Quality Analysis). Voice quality tests typically comprise comparison of the original sample audio data and received sample audio data and some algorithmic processing based on the comparison. The quality of data connections may be studied by determining data throughput and connection properties, for example.

Figure 2 illustrates an example of a testing arrangement. The arrangement comprises a controller PC 200. The controller may be a personal computer, a laptop computer, a server, or any kind of device comprising a processor and capable of processing data.

The arrangement further comprises a user terminal UT 202. The user terminal typically refers to a portable computing device that includes wireless mobile communication devices operating with or without a subscriber identification module (SIM), including, but not limited to, the following types of devices: a mobile station (mobile phone), smartphone, personal digital assistant (PDA), device using a wireless modem, laptop and/or touch screen computer, tablet, phablet, game console, notebook, and multimedia device.

The controller 200 and the user terminal 202 are connected via a data connection 204. Typically the connection is a wireline connection but in some embodiments it may be realized with a wireless connection. In an embodiment, the connection is realized using a universal serial bus (USB) connection. The controller 200 is configured to control the user terminal 202 via the connection 204. The user terminal 202 may establish a voice call connection 208 with another user terminal 206. The user terminal 202 may further establish a data connection 212 with a server 210. The quality of these connections may be monitored and the results stored by the controller 200.

Figure 3 illustrates an example of the controller 200. The figure illustrates a simplified example of an apparatus in which embodiments of the invention may be applied.

It should be understood that the apparatus is depicted herein as an example illustrating some embodiments. It is apparent to a person skilled in the art that the apparatus may also comprise other functions and/or structures and not all described functions and structures are required. Although the apparatus has been depicted as one entity, different modules and memory may be implemented in one or more physical or logical entities.

The apparatus of the example includes a control circuitry 300 configured to control at least part of the operation of the apparatus.

The apparatus may comprise a memory 302 for storing data. Furthermore the memory may store software 304 executable by the control circuitry 300. The memory may be integrated in the control circuitry.

The apparatus may further comprise an interface 310 operationally connected to the control circuitry 300. The interface may connect the apparatus to Internet, for example. The interface may also provide the apparatus with a connection to the user terminal 202. The interface may comprise a universal serial bus interface with which the connection may be realized. The interface may also comprise a wireless communication interface.

The software 304 may comprise a computer program comprising program code means adapted to cause the control circuitry 300 of the apparatus to control the interface 310.

The control circuitry 300 is configured to execute one or more applications. The applications may be stored in the memory 302.

The apparatus may further comprise user interface comprising a display and a keyboard, for example.

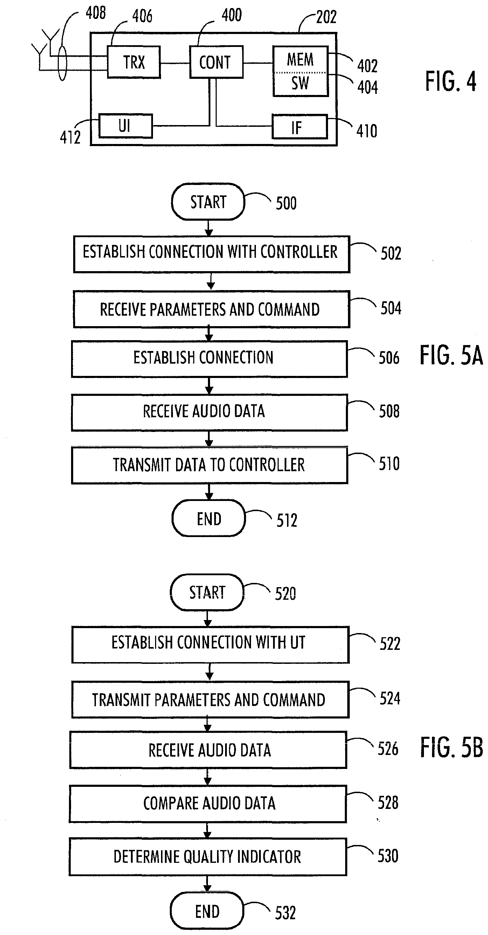

Figure 4 illustrates an example of the user terminal 202. The figure illustrates a simplified example of the apparatus in which embodiments of the invention may be applied.

It should be understood that the apparatus is depicted herein as an example illustrating some embodiments. It is apparent to a person skilled in the art that the apparatus may also comprise other functions and/or structures and not all described functions and structures are required. Although the apparatus has been depicted as one entity, different modules and memory may be implemented in one or more physical or logical entities.

The apparatus of the example includes a control circuitry 400 configured to control at least part of the operation of the apparatus.

The apparatus may comprise a memory 402 for storing data. Furthermore the memory may store software 404 executable by the control circuitry 400. The memory may be integrated in the control circuitry.

The apparatus comprises a transceiver 406. The transceiver is operationally connected to the control circuitry 400. It may be connected to an antenna arrangement 408 comprising one more antenna elements or antennas.

The software 404 may comprise a computer program comprising program code means adapted to cause the control circuitry 400 of the apparatus to control the transceiver 406.

The apparatus may further comprise an interface 410 operationally connected to the control circuitry 400. The interface may provide the apparatus with a connection to the controller 200. The interface may comprise a universal serial bus interface with which the connection may be realized. The interface may also comprise a wireless communication interface.

The control circuitry 400 may be configured to execute one or more applications. The applications may be stored in the memory 402.

The apparatus may further comprise user interface comprising a display (which may or may not be touch sensitive), a keyboard, a speaker and a microphone, for example.

Figure 5A is a flowchart illustrating an example embodiment of the invention. The example illustrates the operation of user terminal UT 202 when the quality of voice connections is examined. The example starts at step 500.

In step 502, the user terminal is configured to establish a digital connection with an external controller 200. The connection may be realized with a universal serial bus between the UT interface 410 and controller interface 310, for example.

In step 504, the user terminal is configured to receive from the external controller on the digital connection test parameters and a command to establish a wireless connection to a given subscriber address. In an embodiment, the test parameters may comprise the given subscriber address, the sample audio data and whether the user terminal is to send or receive sample audio data. In this example, the user terminal is to receive audio data.

In step 506, the user terminal is configured to establish a wireless phone call connection to the given subscriber address.

In step 508, the user terminal is configured to receive sample audio data on the connection.

In step 510, the user terminal is configured to transmit the received sample audio data to the external controller using the digital connection. In an embodiment, the user terminal is configured to package the received sample audio data in one or more data container units and transmit the sample audio data to the external controller in the data container units.

The process ends in step 512.

In an embodiment, the user terminal is configured to receive a predetermined synchronization signal on the wireless connection prior receiving the audio data and adjust timing of the user terminal on the basis of the synchronization signal.

In an embodiment, a synchronization signal is not used but synchronization is achieved using common synchronization timing in the coordination of transmission and reception.

Figure 5B is a flowchart illustrating an example embodiment of the invention. The example illustrates the operation of the controller 200 when the quality of voice connections is examined. The example starts at step 520.

In step 522, the controller 200 is configured to establish a digital connection with an external mobile apparatus UT 202. The connection may be realized with a universal serial bus between the UT interface 410 and controller interface 310, for example.

In step 524, the controller 200 is configured to transmit to the external mobile apparatus test parameters and a command to establish a wireless connection to the given subscriber address. In an embodiment, the test parameters comprise the given subscriber address.

In step 526, the controller 200 is configured to receive from the external mobile apparatus on the digital connection sample audio data, the audio data received by the external mobile apparatus over the established wireless connection.

In step 528, the controller 200 is configured to compare the received sample audio data to reference audio data.

In step 530, the controller 200 is configured to determine on the basis of the comparison one or more quality indicators describing the quality of the established connection. The controller may determine the quality on the basis of ITU PESQ and/or POLQA recommendations, for example.

The process ends in step 532.

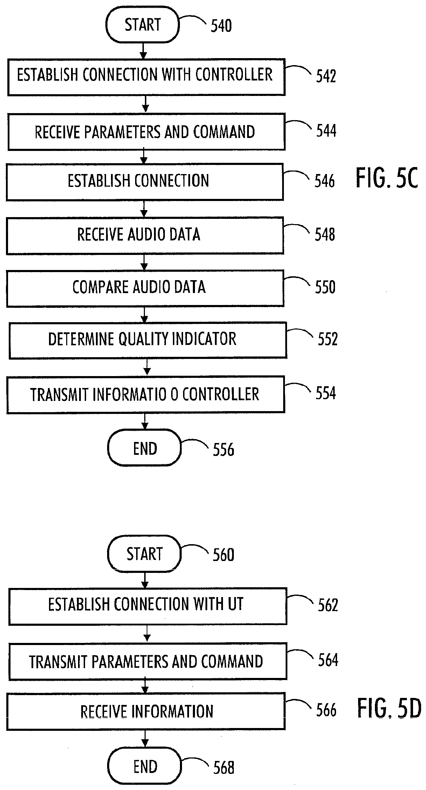

Figure 5C is a flowchart illustrating another example embodiment of the operation of user terminal UT 202 when the quality of voice connections is examined. The example starts at step 540.

In step 542, the user terminal is configured to establish a digital connection with an external controller 200. The connection may be realized with a universal serial bus between the UT interface 410 and controller interface 310, for example.

In step 544, the user terminal is configured to receive from the external controller on the digital connection test parameters and a command to establish a wireless connection to a given subscriber address. In an embodiment, the test parameters may comprise the given subscriber address, the sample audio data and whether the user terminal is to send or receive sample audio data. In this example, the user terminal is to receive audio data.

In step 546, the user terminal is configured to establish a wireless phone call connection to the given subscriber address.

In step 548, the user terminal is configured to receive sample audio data on the connection.

In step 550, the user terminal is configured to compare the received sample audio data to reference audio data.

In step 552, the user terminal is configured to determine on the basis of the comparison one or more quality indicators describing the quality of the established wireless connection. The controller may determine the quality on the basis of ITU PESQ and/or POLQA recommendations, for example.

In step 554, the user terminal is configured to transmit the one or more quality indicators describing the quality of the established wireless connection to the external controller using the digital connection.

Thus, in this embodiment the user terminal is configured to determine quality indicators and transmit the indicators to the controller. This way the processing burden of the controller is reduced.

The process ends in step 556.

Figure 5D is a flowchart illustrating another example embodiment of the operation of the controller 200 when the quality of voice connections is examined. The example starts at step 560.

In step 562, the controller 200 is configured to establish a digital connection with an external mobile apparatus UT 202. The connection may be realized with a universal serial bus between the UT interface 410 and controller interface 310, for example.

In step 564, the controller 200 is configured to transmit to the external mobile apparatus test parameters and a command to establish a wireless connection to the given subscriber address. In an embodiment, the test parameters comprise the given subscriber address.

In step 566, the controller 200 is configured to receive from the external mobile apparatus on the digital connection information related to the sample audio data, the audio data received by the external mobile apparatus over the established wireless connection. In an embodiment, the information is one or more quality indicators describing the quality of the established wireless connection.

The process ends in step 568.

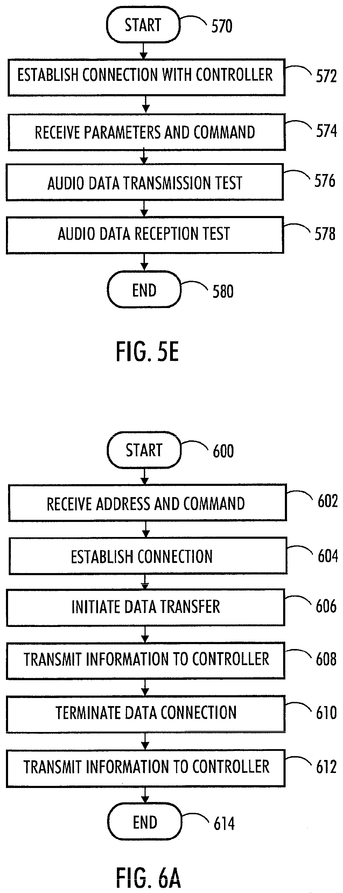

Figure 5E is a flowchart illustrating another example embodiment of the invention. The example illustrates the operation of user terminal UT 202 when the quality of voice connections is examined. In this example, the UT 202 is both transmitting and receiving audio data. The example starts at step 570.

In step 572, the user terminal is configured to establish a digital connection with an external controller 200. The connection may be realized with a universal serial bus between the UT interface 410 and controller interface 310, for example.

In step 574, the user terminal is configured to receive from the external controller on the digital connection test parameters and a command to establish a wireless connection to a given subscriber address. In an embodiment, the test parameters comprise the given subscriber address. The test parameters may also comprise the sample audio data. In an embodiment, the same sample audio data is used both in the transmission and reception.

In step 576, a transmission test is performed. In the test, the UT may first transmit a synchronization signal and the sample audio data.

In step 578, a reception test is performed as described in the flowchart of Figure 5A.

The process ends in step 580.

Figure 6A is a flowchart illustrating an example helping to understand the invention. The example illustrates the operation of user terminal UT 202 when the quality of data connections is examined. The example starts at step 600.

In step 602, the user terminal 202 is configured to receive from an external controller test parameters and a command to establish a data connection with an external server 210. The connection may at least in part be wireless.

In an embodiment, the test parameters comprise the address of the external server. The address may be an Internet Protocol (IP) address. The test parameters may also comprise host port of the external server, username and password needed in FTP login process, connection timeout, passive/active mode FTP information, transfer direction (uplink/downlink), remote file name, local file name, uplink data length (if uplink transfer), downlink data length (if downlink transfer), number of transfer attempts and number of retries.

As with voice test, also in data connection test the user terminal may either send or receive data. Thus in an embodiment, the external server is a user terminal.

In step 604, the user terminal is configured to establish a data connection with the external server. In an embodiment, the server is an FTP (File Transfer Protocol) server and the connection utilises FTP.

In step 606, the user terminal is configured to initiate data transfer with the external server.

In step 608, the user terminal is configured to transmit to the external controller information on the data transfer during the data transfer. In an embodiment, the information comprises information on the data throughput of the data transfer.

In step 610, the user terminal is configured to terminate the data connection when the data transfer is completed.

In step 612, the user terminal is configured to transmit information related to the success of the data transfer to the external controller.

The process ends in step 614.

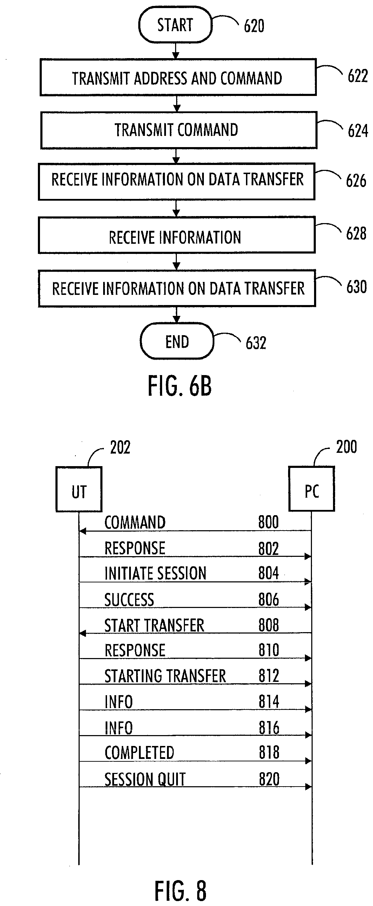

Figure 6B is a flowchart illustrating an example helping to understand the invention. The example illustrates the operation of the controller 200 when the quality of data connections is examined. The example starts at step 620.

In step 622, the controller 200 is configured to transmit to an external mobile apparatus 200 test parameters and a command to establish a data connection with an external server 210. The connection may at least in part be wireless. In an embodiment, the test parameters comprise the address of the external server. The address may be an Internet Protocol (IP) address.

In step 624, the controller 200 is configured to transmit to the external mobile apparatus 202 a command to start data transfer on the established connection.

In step 626, the controller 200 is configured to receive from the external mobile apparatus information on the data transfer during the data transfer. In an embodiment, the information comprises information on the data throughput of the data transfer. The information on the data transfer may be transmitted at given time intervals during the data transfer.

In step 628, the controller 200 is configured to receive from the external mobile apparatus information that the data transfer has completed.

In step 630, the controller 200 is configured to receive from the external mobile apparatus information related to the success of the data transfer.

The process ends in step 632.

In an embodiment, the controller 200 is connected to the user terminal 202 using a digital connection such as a universal serial bus. The controller 200 may be configured to execute software controlling the operation of the user terminal during the voice quality measurements. In an embodiment, all communication between the controller and the user terminal is performed using the digital connection. Thus, no other connections are needed. As the connection between the user terminal and the controller is digital, there is no need for any special hardware in the controller. For example, no analog connection or soundcards are needed in the voice quality measurements. This increases the reliability of the measurements. In addition, as in many present user terminals digital and analog connections may interfere with each other, the user of a mere digital connection avoids these interference sources.

In an embodiment, the user terminal 202 may be configured to execute software configured to start a service running in the user terminal, the service being responsive to the control of the controller. The controller software may communicate with the service using the digital connection between the devices. The software may start automatically when the user terminal is switched on. The service running in the user terminal may show information on the display of the user terminal. The information may be related to the status of the digital connection, or to the service. For example, the version number of the software running the service or license of the software may be displayed.

The software running in the controller 200 may control the service in the user terminal to execute voice quality tests and data connection tests, for example. In an embodiment, the software running in the controller 200 and the service in the user terminal may communicate using messages transmitted on the digital connection, the messages utilizing a given protocol.

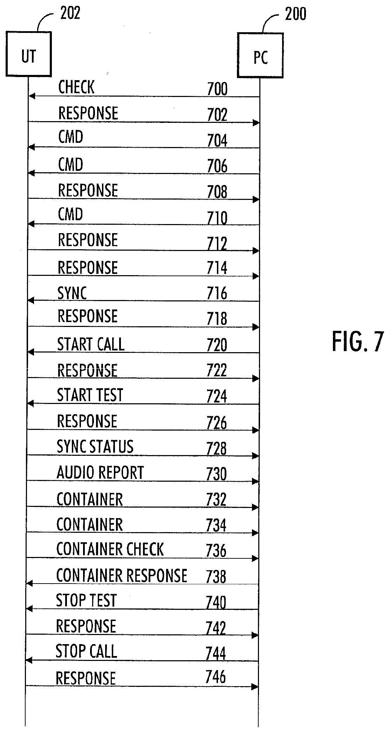

Figure 7 is a signalling chart illustrating an example of an embodiment where the controller 200 is controlling a user terminal UT 202. In this example voice quality measurements are performed. The quality measurement example of Figure 7 a sample audio file is used. A sample audio file may be transmitted and/or received by the UT and the controller is configured to compare sample audio data with reference sample audio data and determine an indicator for voice quality.

The message sequence below is illustrative and all messages are not required in every measurement situation.

The example of Figure 7 starts when the controller 200 transmits a command 700 to the UT 202 requesting current sample parameters stored in the UT memory.

The UT responds 702 with the reference sample parameters currently stored in the UT memory.

The controller may command 704 the UT to set new sample parameters. The sample parameters may be sent in more than one message.

The UT transmits a response 708 indicating that the first message has been received.

The controller transmits another message 710 comprising sample parameters and the UT acknowledges 712 the reception.

After receiving all messages comprising the sample parameters the UT transmits a response 714 that the new sample parameters have been set.

The controller may request 716 the UT to response with current time stamp to enable synchronization of measurements. The UT responds 718 with a time stamp.

Next, the controller commands 720 the UT to initiate a voice call with a second terminal having a given phone number. The UT acknowledges 722 the command.

The controller commands 724 the UT to initiate voice quality test. The UT acknowledges 726 the command.

The UT may receive a synchronization signal from the second terminal. The UT may send a message 728 to the controller that synchronization has been achieved.

Next, the UT sends a message 730 to the controller that a sample audio data has been received by the UT. The sample audio data is transmitted to the controller in one or more separate messages. In an embodiment, the UT is configured to package the received sample audio data in one or more data container units and transmit the sample audio data to the external controller in the data container units. In the example of Figure 7, the UT transmits the sample audio data containers in messages 732, 734.

When all messages comprising audio data have been transmitted the UT may request 736 the controller to respond with the status of the containers. The controller responds 738 with an acknowledgement. In this example none of the containers need resending.

The controller commands 740 the UT to stop the voice quality test. The UT acknowledges 742 the command.

Last, the controller commands 744 the UT to stop the voice call. The UT acknowledges 746 the command.

The communication between the controller and the UT stops. The controller may process the received sample audio data and determine the quality on the basis of ITU PESQ and/or POLQA recommendations, for example.

Figure 8 is a signalling chart illustrating an example helping to understand the invention. The controller 200 is controlling a user terminal UT 202. In this example data connection quality measurements are performed. In the example of Figure 8 an FTP connection is used and studied. A data transfer is performed between an FTP server and the user terminal and data throughput and connection parameters are stored by the controller.

The example of Figure 8 starts when the controller 200 transmits a command 800 to the UT 202 to connect and login to an FTPserver. The connection parameters and other test parameters may have been sent to the UT earlier. The UT acknowledges 802 the command.

The UT transmits the controller a message 804 indicating that a connect and login attempt is starting. The UT connects to the FTPserver and transmits the controller a message 806 indicating that the connect and login attempt was successful.

Next, the controller transmits the UT a command 808 to start the data transfer. The UT acknowledges 810 the command.

The UT transmits the controller a message 812 indicating that the file transfer is starting.

During the data transfer the UT transmits to the controller messages 814, 816 indicating the number of bytes transferred. The messages may comprise information on the current data throughput. The messages may be sent at given time intervals. The intervals may be predetermined on set by the controller. For example, the messages may be sent once or twice per second. However, these numerical vales are merely illustrative.

The UT transmits the controller a message 818 indicating that the file transfer has been completed. The message may comprise information on the data transfer, such as a success/failure indicator regarding the data transfer.

Finally, the UT transmits a message 820 that the FTPsession has been terminated.

In the above data test arrangement, all FTP related processing is performed by the user terminal. The user terminal is responsible for taking care of the data transfer protocol. The controller merely receives the results of the data transfer measurements and related parameters. Thus, the controller has relatively small processing load related to the test. In modern wireless communication systems the data rates may be up to 100 Mb/s. Therefore handling of the FTP related processing would load the controller considerably and only one or two user terminal tests could be performed at the same time. As in the above procedure the controller processing load is small the number of user terminals which may be connected to the controller at the same time may be increased up to tenfold. This enables more intensive testing.

The user terminal 202 does not need any user intervention during the audio quality or data test procedures. For example, voice quality synchronization and audio capturing are performed automatically under the control of the controller. Likewise the FTP connection establishment and data transfer do not need user input.

The steps and related functions described in the above and attached figures are in no absolute chronological order, and some of the steps may be performed simultaneously or in an order differing from the given one. Other functions can also be executed between the steps or within the steps. Some of the steps can also be left out or replaced with a corresponding step.

The apparatuses or controllers able to perform the above-described embodiments may be implemented as an electronic digital computer, or a circuitry which may comprise a working memory (RAM), a central processing unit (CPU), and a system clock. The CPU may comprise a set of registers, an arithmetic logic unit, and a controller. The controller or the circuitry is controlled by a sequence of program instructions transferred to the CPU from the RAM. The controller may contain a number of microinstructions for basic operations. The implementation of microinstructions may vary depending on the CPU design. The program instructions may be coded by a programming language, which may be a high-level programming language, such as C, Java, etc., or a low-level programming language, such as a machine language, or an assembler. The electronic digital computer may also have an operating system, which may provide system services to a computer program written with the program instructions.

As used in this application, the term 'circuitry' refers to all of the following: (a) hardware-only circuit implementations, such as implementations in only analog and/or digital circuitry, and (b) combinations of circuits and software (and/or firmware), such as (as applicable): (i) a combination of processor(s) or (ii) portions of processor(s)/software including digital signal processor(s), software, and memory(ies) that work together to cause an apparatus to perform various functions, and (c) circuits, such as a microprocessor(s) or a portion of a microprocessor(s), that require software or firmware for operation, even if the software or firmware is not physically present.

This definition of 'circuitry' applies to all uses of this term in this application. As a further example, as used in this application, the term 'circuitry' would also cover an implementation of merely a processor (or multiple processors) or a portion of a processor and its (or their) accompanying software and/or firmware. The term 'circuitry' would also cover, for example and if applicable to the particular element, a baseband integrated circuit or applications processor integrated circuit for a mobile phone or a similar integrated circuit in a server, a cellular network device, or another network device.

An example provides a computer program embodied on a distribution medium, comprising program instructions which, when loaded into an electronic apparatus, are configured to control the apparatus to execute the embodiments described above.

The computer program may be in source code form, object code form, or in some intermediate form, and it may be stored in some sort of carrier, which may be any entity or device capable of carrying the program. Such carriers include a record medium, computer memory, read-only memory, and a software distribution package, for example. Depending on the processing power needed, the computer program may be executed in a single electronic digital computer or it may be distributed amongst a number of computers.

The apparatus may also be implemented as one or more integrated circuits, such as application-specific integrated circuits ASIC. Other hardware embodiments are also feasible, such as a circuit built of separate logic components. A hybrid of these different implementations is also feasible. When selecting the method of implementation, a person skilled in the art will consider the requirements set for the size and power consumption of the apparatus, the necessary processing capacity, production costs, and production volumes, for example.

It will be obvious to a person skilled in the art that, as the technology advances, the inventive concept can be implemented in various ways. The invention and its embodiments are not limited to the examples described above but may vary within the scope of the claims.

## Claims

1. A user terminal for testing connections, comprising:
means (400, 410) for establishing a digital connection with a controller external to the user terminal;
means (400, 410) for receiving from the controller on the digital connection test parameters and a command to establish a wireless connection to a given subscriber address, the test parameters comprising reference audio data;
means (400, 406) for establishing a wireless phone call connection to the given subscriber address;
means (400, 410) for receiving sample audio data on the wireless connection;
means (400) for comparing the received sample audio data to the reference audio data and determining based on the comparison one or more quality indicators describing the voice quality of the established wireless connection;
means (400, 410) for transmitting one or more quality indicators describing the voice quality of the established connection to the controller using the digital connection.

2. The user terminal of claim 1, wherein the user terminal further comprises
means (400, 406) for receiving a predetermined synchronization signal on the wireless connection prior receiving the audio data;
means (400) for adjusting timing of the apparatus on the basis of the synchronization signal.

3. The user terminal of claim 1, wherein the user terminal further comprises:
means (400) for packaging the received sample audio data in one or more data container units;
means (400, 410) for transmitting the sample audio data to the external controller in the data container units.

4. The user terminal of any preceding claim, wherein the test parameters comprise the given subscriber address.

5. The user terminal of any preceding claim, wherein the user terminal further comprises:
means (400, 406) for transmitting a predetermined synchronization signal on the wireless connection;
means (400, 406) for transmitting sample audio data on the wireless connection.

6. The user terminal of claim 5, wherein the user terminal further comprises:
means (400, 410) for receiving from the controller the sample audio data to be transmitted.

7. The user terminal of claim 5, wherein the user terminal further comprises:
means (400, 406) for repeating the reception and transmission of sample audio data a predetermined number of times.

8. A testing method performed by a user terminal, comprising:
establishing (502) a digital connection with a controller; **characterised by**
receiving (504) from the controller on the digital connection test parameters and a command to establish a wireless connection to a given subscriber address, the test parameters comprising reference audio data;
establishing (506) a wireless phone call connection to the given subscriber address;
receiving (508) sample audio data on the wireless connection;
comparing the received sample audio data to reference audio data and determining based on the comparison one or more quality indicators describing the voice quality of the established connection;
transmitting (510) one or more quality indicators describing the voice quality of the established connection to the controller using the digital connection.

## Patentansprüche

1. Eine Benutzerstation zum Testen von Verbindungen, die folgende Merkmale aufweist:
eine Einrichtung (400, 410) zum Herstellen einer digitalen Verbindung mit einer Steuerung, die außerhalb der Benutzerstation liegt;
eine Einrichtung (400, 410) zum Empfangen von Testparametern und einem Befehl von der Steuerung auf der digitalen Verbindung, um eine Drahtlosverbindung mit einer festgelegten Teilnehmeradresse herzustellen, wobei die Testparameter Referenzaudiodaten aufweisen;
eine Einrichtung (400,406) zum Herstellen einer Drahtlostelefonanrufverbindung zu der festgelegten Teilnehmeradresse;
eine Einrichtung (400, 410) zum Empfangen von Probeaudiodaten auf der Drahtlosverbindung;
eine Einrichtung (400) zum Vergleichen der empfangenen Probeaudiodaten mit den Referenzaudiodaten und zum Bestimmen eines oder mehrerer Qualitätsindikatoren, die die Sprachqualität der hergestellten Drahtlosverbindung beschreiben, auf der Basis des Vergleichs;
eine Einrichtung (400, 410) zum Senden eines oder mehrerer Qualitätsindikatoren, die die Sprachqualität der hergestellten Verbindung beschreiben, zu der Steuerung unter Verwendung der digitalen Verbindung.

2. Die Benutzerstation gemäß Anspruch 1, wobei die Benutzerstation ferner Folgendes aufweist:
eine Einrichtung (400, 406) zum Empfangen eines vorbestimmten Synchronisationssignals auf der Drahtlosverbindung vor dem Empfangen der Audiodaten;
eine Einrichtung (400) zum Einstellen einer Zeitsteuerung der Vorrichtung auf der Basis des Synchronisationssignals.

3. Die Benutzerstation gemäß Anspruch 1, wobei die Benutzerstation ferner Folgendes aufweist:
eine Einrichtung (400) zum Verpacken der empfangenen Probeaudiodaten in einer oder mehreren Datenbehältereinheiten;
eine Einrichtung (400, 410) zum Senden der Probeaudiodaten zu der externen Steuerung in den Datenbehältereinheiten.

4. Die Benutzerstation gemäß einem der vorhergehenden Ansprüche, wobei die Testparameter die festgelegte Teilnehmeradresse aufweisen.

5. Die Benutzerstation gemäß einem der vorhergehenden Ansprüche, wobei die Benutzerstation ferner Folgendes aufweist:
eine Einrichtung (400, 406) zum Senden eines vorbestimmten Synchronisationssignals auf der Drahtlosverbindung;
eine Einrichtung (400, 406) zum Senden von Probeaudiodaten auf der Drahtlosverbindung.

6. Die Benutzerstation gemäß Anspruch 5, wobei die Benutzerstation ferner Folgendes aufweist:
eine Einrichtung (400, 410) zum Empfangen der zu sendenden Probeaudiodaten von der Steuerung.

7. Die Benutzerstation gemäß Anspruch 5, wobei die Benutzerstation ferner Folgendes aufweist:
eine Einrichtung (400, 406) zum Wiederholen des Empfangs und der Sendung der Probeaudiodaten für eine vorbestimmte Anzahl von Malen.

8. Ein Testverfahren, das durch eine Benutzerstation ausgeführt wird, mit folgenden Schritten:
Herstellen (502) einer digitalen Verbindung mit einer Steuerung; durch Folgendes gekennzeichnet:
Empfangen (504) von Testparametern und einem Befehl von der Steuerung auf der digitalen Verbindung, um eine Drahtlosverbindung mit einer festgelegten Teilnehmeradresse herzustellen, wobei die Testparameter Referenzaudiodaten aufweisen;
Herstellen (506) einer Drahtlostelefonanrufverbindung mit der festgelegten Teilnehmeradresse;
Empfangen (508) von Probeaudiodaten auf der Drahtlosverbindung;
Vergleichen der empfangenen Probeaudiodaten mit Referenzaudiodaten und Bestimmen eines oder mehrerer Qualitätsindikatoren, die die Sprachqualität der hergestellten Verbindung beschreiben, auf der Basis des Vergleichs;
Senden (510) eines oder mehrerer Qualitätsindikatoren, die die Sprachqualität der hegestellten Verbindung beschreiben, an die Steuerung unter Verwendung der digitalen Verbindung.

## Revendications

1. Terminal d'utilisateur pour tester les connexions, comprenant:
un moyen (400, 410) destiné à établir une connexion numérique avec un moyen de commande externe au terminal d'utilisateur;
un moyen (400, 410) destiné à recevoir du moyen de commande sur la connexion numérique les paramètres de test et une commande pour établir une connexion sans fil à une adresse d'abonné donnée, les paramètres de test comprenant les données audio de référence;
un moyen (400, 406) destiné à établir une connexion d'appel téléphonique sans fil à l'adresse d'abonné donnée;
un moyen (400, 410) destiné à recevoir des échantillons de données audio sur la connexion sans fil;
un moyen (400) destiné à comparer les données audio d'échantillons reçues avec les données audio de référence et à déterminer, sur base de la comparaison, un ou plusieurs indicateurs de qualité décrivant la qualité vocale de la connexion sans fil établie;
un moyen (400, 410) destiné à transmettre au moyen de commande un ou plusieurs indicateurs de qualité décrivant la qualité vocale de la connexion établie à l'aide de la connexion numérique.

2. Terminal d'utilisateur selon la revendication 1, dans lequel le terminal d'utilisateur comprend par ailleurs
un moyen (400, 406) destiné à recevoir un signal de synchronisation prédéterminé sur la connexion sans fil avant de recevoir les données audio;
un moyen (400) destiné à ajuster la synchronisation de l'appareil sur base du signal de synchronisation.

3. Terminal d'utilisateur selon la revendication 1, dans lequel le terminal d'utilisateur comprend par ailleurs:
un moyen (400) destiné à empaqueter les données audio d'échantillon reçues en une ou plusieurs unités de conteneur de données;
un moyen (400, 410) destiné à transmettre les données audio d'échantillon au moyen de commande externe dans les unités de conteneur de données.

4. Terminal d'utilisateur selon l'une quelconque des revendications précédentes, dans lequel les paramètres de test comprennent l'adresse d'abonné donnée.

5. Terminal d'utilisateur selon l'une quelconque des revendications précédentes, dans lequel le terminal d'utilisateur comprend par ailleurs:
un moyen (400, 406) destiné à transmettre un signal de synchronisation prédéterminé sur la connexion sans fil;
un moyen (400, 406) destiné à transmettre les données audio d'échantillon sur la connexion sans fil.

6. Terminal d'utilisateur selon la revendication 5, dans lequel le terminal d'utilisateur comprend par ailleurs:
un moyen (400, 410) destiné à recevoir du moyen de commande les données audio d'échantillon à transmettre.

7. Terminal d'utilisateur selon la revendication 5, dans lequel le terminal d'utilisateur comprend par ailleurs:
un moyen (400, 406) destiné à répéter la réception et la transmission des données audio d'échantillon un nombre de fois prédéterminé.

8. Procédé de test effectué par un terminal d'utilisateur, comprenant le fait de:
établir (502) une connexion numérique avec un moyen de commande;
**caractérisé par** le fait de
recevoir (504) du moyen de commande sur la connexion numérique les paramètres de test et une commande pour établir une connexion sans fil à une adresse d'abonné donnée, les paramètres de test comprenant les données audio de référence;
établir (506) une connexion d'appel téléphonique sans fil à l'adresse d'abonné donnée;
recevoir (508) les échantillons de données audio sur la connexion sans fil;
comparer les données audio d'échantillon reçues avec les données audio de référence et déterminer, sur base de la comparaison, un ou plusieurs indicateurs de qualité décrivant la qualité vocale de la connexion établie;
transmettre (510) un ou plusieurs indicateurs de qualité décrivant la qualité vocale de la connexion établie au moyen de commande à l'aide de la connexion numérique.
